(19) Europäisches Patentamt

European Patent Office

Office européen des brevets

(11) **EP 0 685 727 B1**

(12) **FASCICULE DE BREVET EUROPEEN**

(45) Date de publication et mention
de la délivrance du brevet:
**14.08.2002 Bulletin 2002/33**

(51) Int Cl.[7]: **G01N 15/06**, G01N 27/64

(21) Numéro de dépôt: **95401192.0**

(22) Date de dépôt: **22.05.1995**

(54) **Spectromètre de particules, notamment submicroniques**

Teilchenspektrometer, i.B. für submikronische Teilchen

Particle spectrometer, especially for submicronic particles

(84) Etats contractants désignés:
**AT DE DK FR GB IT**

(30) Priorité: **24.05.1994 FR 9406274**

(43) Date de publication de la demande:
**06.12.1995 Bulletin 1995/49**

(73) Titulaire: **COMMISSARIAT A L'ENERGIE ATOMIQUE**
**75015 Paris (FR)**

(72) Inventeur: **Pourprix, Michel**
**F-91310 Monthlery (FR)**

(74) Mandataire: **Dubois-Chabert, Guy et al**
**BREVATOME**
**3, rue du Docteur Lanceraux**
**75008 Paris (FR)**

(56) Documents cités:
**EP-A- 0 404 681** **WO-A-93/07465**
**US-A- 4 556 849**

• **TRANSACTIONS OF THE IEEE ON NUCLEAR SCIENCE, vol.NS-19, no.1, 1 Février 1972 pages 64 - 74 RAABE 'INSTRUMENTS AND METHODS FOR CHARACTERIZING RADIOACTIVE AEROSOLS'**
• **SCHOWENGERDT F.D. ET AL: 'A parallel-plate electrostatic size classifier for aerosol particles' REV. SCI. INSTRUM. vol. 51, no. 8, 1980, USA, pages 1098 - 1104**
• **KNUTSON E.O. ET AL: 'Aerosol classification by electric mobility: apparatus, theory, and applications' J. AEROSOL SCI. vol. 6, no. 6, 1975, UK, pages 443 - 451**

**Description**

Domaine technique

La présente invention a pour objet un nouveau spectromètre de particules permettant en particulier de déterminer la distribution granulométrique des particules d'aérosol en suspension dans l'air (ou dans un autre gaz) couvrant un domaine de dimension compris entre le nanomètre ($10^{-9}$m) et quelques micromètres ($10^{-6}$m).

Entre autres applications, ce spectromètre est par exemple particulièrement bien adapté à la détermination du spectre granulométrique de l'aérosol atmosphérique pour la surveillance en continu de la qualité de l'air dans des installations ou dans l'environnement.

Art antérieur

L'un des moyens les plus performants aujourd'hui pour déterminer la distribution granulométrique des aérosols submicroniques consiste à mesurer le spectre de mobilité électronique des particules dont on connaît par ailleurs la loi de charge. Il n'est pas inutile pour la compréhension de la suite du présent texte de rappeler que, en équilibre stationnaire, dans un volume déterminé d'atmosphère, la somme globale des charges électriques positives et négatives portées par les particules d'un aérosol qui s'y trouve est nulle. Ceci signifie qu'à chaque instant, l'échantillon contenu dans cette partie d'atmosphère comporte autant de charges positives que de charges négatives, en général selon une distribution gaussienne centrée sur la charge nulle et décroissante en fonction du nombre de charges élémentaires. C'est la loi de charge dite "loi de Boltzman".

Par conséquent, on a déjà utilisé fréquemment pour la sélection des aérosols, des champs électrostatiques agissant sur les charges électriques qu'ils portent. A cet effet, on définit couramment une notion fondamentale dans ce domaine qui est celle de la mobilité électrique d'une particule chargée placée dans un champ électrostatique. Cette grandeur, qui définit la plus ou moins grande aptitude d'une telle particule à subir une déviation sous l'effet de ce champ, peut se traduire par l'égalité suivante :

$$\vec{W} = Z\,\vec{E},$$

égalité vectorielle dans laquelle $\vec{W}$ est la vitesse de dérive acquise par la particule sous l'influence du champ électrique E à laquelle elle est soumise. Le coefficient Z de proportionnalité entre les deux grandeurs précédentes est précisément la mobilité électrique en question. Comme cette mobilité électrique est, ce qui est d'ailleurs conforme à l'intuition, d'une part proportionnelle à la charge électrique de la particule et d'autre part inversement proportionnelle à sa granulométrie, on conçoit la possibilité de réaliser de véritables spectromètres de mobilité électrique consistant à soumettre des particules d'aérosols entraînées dans un courant gazeux à l'action d'un champ électrique existant entre deux électrodes. Sous l'effet du champ, les particules chargées de ces aérosols se déposent, suivant leur signe, sur l'une de ces électrodes et l'abscisse de leur dépôt par rapport à la direction du courant gazeux est caractéristique de leur mobilité en ce sens que plus cette mobilité électrique est élevée, plus l'abscisse de leur dépôt est faible. On obtient ainsi un étalement dans l'espace des particules collectées, qui en réalise une spectrométrie en fonction de leur mobilité électrique.

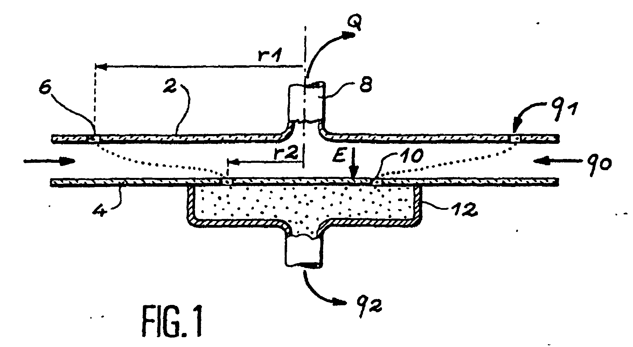

Un appareil reposant sur ce principe est décrit dans le certificat d'addition français n°90 02413 du 27/02/90, publié sous le n°2 658 916 (US-5 117 190), intitulé "capteur électrostatique de particules d'aérosol et appareils en comportant application". Ce type d'appareil comporte deux disques conducteurs coaxiaux, espacés et parallèles entre lesquels on établit une différence de potentiel. L'espace compris entre les deux disques communique avec l'atmosphère à examiner à travers une ouverture supérieure. Une aspiration centrale est prévue dans le premier disque pour faire circuler dans l'espace entre les disques, à partir de la périphérie des disques, un écoulement d'air filtré laminaire. Les particules sont entraînées vers une seconde fente annulaire dans le second disque et captées dans un boîtier cylindrique accolé sous le second disque. Un appareil similaire est illustré sur la figure 1 et comporte deux disques conducteurs coaxiaux 2, 4 espacés et parallèles entre lesquels on établit une différence de potentiel V et, donc, un champ électrique uniforme $\vec{E}$. Le disque 2 comporte une fente annulaire 6 (rayon $r_1$) par laquelle sont introduites les particules à analyser avec un débit $q_1$. Une aspiration centrale 8 est prévue, par laquelle un débit d'air Q circule sous l'effet d'une pompe non représentée sur la figure.

Les particules chargées ayant la mobilité électrique requise sont entraînées vers une seconde fente annulaire 10 de rayon $r_2$ pratiquée dans le disque 4 sous l'action conjuguée :

- d'un écoulement d'air filtré au débit $q_0$, radial et laminaire, établi entre les deux disques,
- du champ électrique E imposé entre les deux disques.

A travers la fente 10, l'air s'écoule avec un débit $q_2$ dans un boîtier cylindrique 12 accolé sous le disque 4. On a donc : $Q = q_0 + q_1 - q_2$. Les particules qui traversent la fente 10 ont la même mobilité électrique $Z = Q/\pi E(r_1^2 - r_2^2)$.

Pour régler cette mobilité électrique à la valeur souhaitable cas par cas, on peut agir sur les deux paramètres que sont le débit Q d'une part et la différence de potentiel V appliquée entre les deux disques conducteurs coaxiaux 2 et 4.

Par le boîtier cylindrique 12 et un conduit, les particules peuvent ensuite être dirigées vers un détecteur.

Bien que satisfaisant à certains égards, ce type d'appareil présente néanmoins certains inconvénients, notamment s'il est utilisé pour sélectionner des particules de taille nanométrique.

En premier lieu, le transport des particules de taille nanométrique dans les circuits du système entraîne des pertes par diffusion brownienne au voisinage des parois notamment dans le boîtier cylindrique 12, dans le conduit de sortie jusqu'au détecteur et dans le détecteur lui-même. A titre indicatif, un conduit de 30cm de longueur, au débit de 0,3 $\ell$/min collecte par diffusion brownienne environ 50% des particules de 3 nanomètres.

En second lieu, du fait du régime d'écoulement laminaire dans les circuits, les particules se situant au centre des conduits se déplacent plus vite que celles se situant au voisinage des parois et il se produit, de ce fait, un étalement du temps de transit des particules à travers l'appareil, ce qui nuit à la précision du comptage par le détecteur, notamment lorsque le champ électrique est fonction du temps.

Exposé de l'invention

L'invention a pour but de résoudre ces problèmes.

L'invention a pour objet un spectromètre de mobilité électrique de particules d'aérosol contenues dans une atmosphère à examiner, comprenant :

- un premier et un second disques conducteurs coaxiaux, espacés et parallèles, entre lesquels on peut établir un champ électrique en les portant à des potentiels différents, l'espace compris entre les deux disques communiquant avec l'atmosphère à examiner,
- une aspiration centrale prévue dans le premier disque pour faire circuler dans cet espace, à partir de la périphérie des disques, un écoulement d'air filtré laminaire, centripète et stable,
- des moyens aptes à faire varier la mobilité électrique sélectionnée, le second disque ayant une ouverture annulaire de rayon moyen $r_2$

caractérisé en ce que l'espace compris entre les deux disques communique avec l'atmosph à examiner à travers une fente annulaire de rayon $r_1$ pratiquée dans le premier disque, en ce que $r_2$ est inférieur à $r_1$ pour permettre la sélection de particules d'aérosol ayant une mobilité électrique donnée et en ce que le spectromètre comprend un détecteur d'aérosols placé immédiatement au-dessous de l'ouvertur annulaire de façon à pouvoir détecter les particules ayant la mobilité électrique donnée

L'invention permet de s'affranchir de la présence du boîtier cylindrique 12 (figure 1) et permet ainsi d'éviter des pertes dans ce boîtier. Il est en outre plus compact, du fait de l'absence de ce boîtier 12.

Selon un mode particulier de réalisation, l'ouverture annulaire se trouve réduite à un seul orifice d'extraction central.

Cette configuration permet d'extraire des particules exactement dans l'axe de l'appareil. Les particules sont ainsi véhiculées en écoulement laminaire, sans contact avec les parois (donc sans perte), avec des temps de transit identiques et en suivant des trajectoires identiques. Les temps de transit sont en outre faciles à déterminer puisque les dimensions géométriques du système sont facilement déterminables.

Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :

- la figure 1 représente un spectromètre électrostatique de particules d'aérosol,

- la figure 2 représente un spectromètre selon l'invention, comportant un électromètre comme détecteur,

- la figure 3 représente un spectomètre selon l'invention, comportant un détecteur nucléaire.

Description détaillée de modes de réalisation

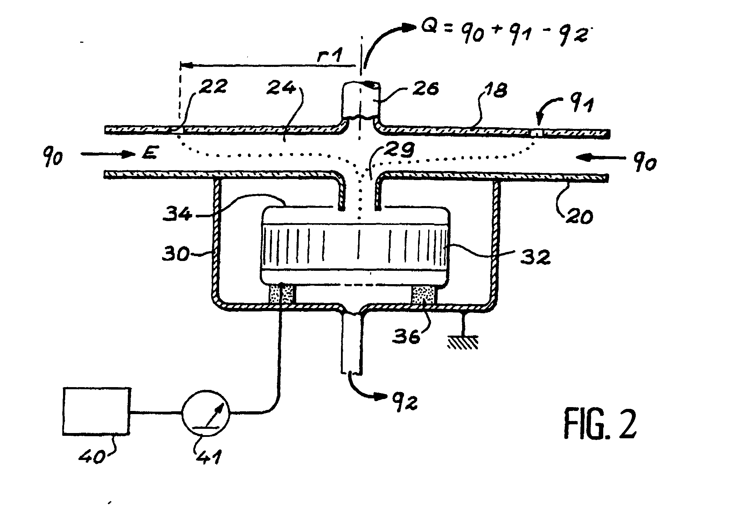

La figure 2 représente un schéma d'un appareil selon l'invention.

Ce dernier comprend d'abord un sélecteur de mobilité électrique circulaire (en abrégé SMEC), comportant deux disques 18, 20 concentriques. Le premier disque 18 présente une fente annulaire 22 de rayon $r_1$ par laquelle un échantillon de gaz contenant les particules à analyser est introduit avec un débit $q_1$. Un conduit ou tubulure d'aspiration centrale 26 permet d'extraire un débit d'air Q de l'espace situé entre les deux disques. Les deux disques étant conducteurs, on peut donc les porter chacun à un certain potentiel et établir dans l'espace 24 qui les sépare un champ électrique $\vec{E}$. Entre les deux disques, à la périphérie de l'espace 24, est injecté au débit $q_0$, par des moyens non représentés sur la figure 2, un gaz d'entraînement (air filtré), tel qu'un écoulement laminaire circule entre les deux disques, jusqu'à la tubulure 26 d'aspiration centrale qui absorbe donc un débit $Q=q_0+q_1-q_2$.

Les particules qui arrivent au centre du second disque 20, et qui sont aspirées avec un débit $q_2$ à travers l'orifice 29, ont pour mobilité $Z=Q/\pi E r_1^2$.

Le diamètre $\phi$ de l'orifice 29 est de préférence choisi de façon à assurer une bonne sélectivité des particules (si le diamètre est important la sélectivité est faible) mais aussi de façon à ne pas perturber l'écoulement du fluide qui le traverse (si le diamètre est faible, un phénomène de "jet" se produit au niveau de cet orifice et il peut y avoir une trop grande perte de charge à ce niveau).

Le spectromètre selon l'invention, avec fente annulaire, réduite ou pas à un orifice d'extraction central, fonctionne avec un électromètre comme détecteur. Le détecteur est essentiellement constitué d'une cage de Faraday 30, d'un filtre 32 supporté par un porte-filtre 34 conducteur et relié par une bague isolante 36, à la cage 30. La référence 40 désigne un électromètre relié au porte-filtre 34. Les particules chargées piégées sur le filtre 32 induisent un courant i qui est mesuré par l'électromètre 40 et les données peuvent être recueillies par des moyens de traitement, de mémorisation et d'analyse 41.

Si N est la concentration des particules à analyser, p le nombre de charge moyen porté par chaque particule, q le débit de prélèvement au travers du filtre, il apparaît un courant électrique i tel que :

$$i=qNpe$$

où e est la charge électronique élémentaire.

En pratique, les principales applications de cette méthode se situent dans le cas où $|p|=1$ (une seule charge électrique portée par les particules) et dans ce cas, la concentration des particules s'exprime directement par :

$$N=i/qe,$$

Ce mode de réalisation permet en outre de réaliser un spectromètre de granulométrie d'aérosols. Le spectre de mobilité des particules est d'abord établi en effectuant un balayage de la mobilité des particules à l'aide des moyens prévus à cet effet, par exemple un balayage $E=f(t)$. Puis, à partir de la connaissance des données suivantes :

- loi de charge des particules initiales en fonction de leur dimension,
- valeur des différents débits,
- caractéristiques dimensionnelles du dispositif,
- fonction $E=f(t)$ (pour le cas d'un balayage en tension),
- temps de transit des particules,
- taux de comptage des impulsions en fonction du temps, il est possible de remonter automatiquement au spectre granulométrique des particules initiales grâce à un programme de calcul, fonctionnant sur un micro-ordinateur spécialement programmé à cet effet. Un tel programme repose sur une technique de calcul comme celle décrite dans l'article de S.C. Wang et al., intitulé "Scanning Electrical Mobility Spectrometer" publié dans Aerosol Science and Technology, vol. 13, pp. 230-240, (1990).

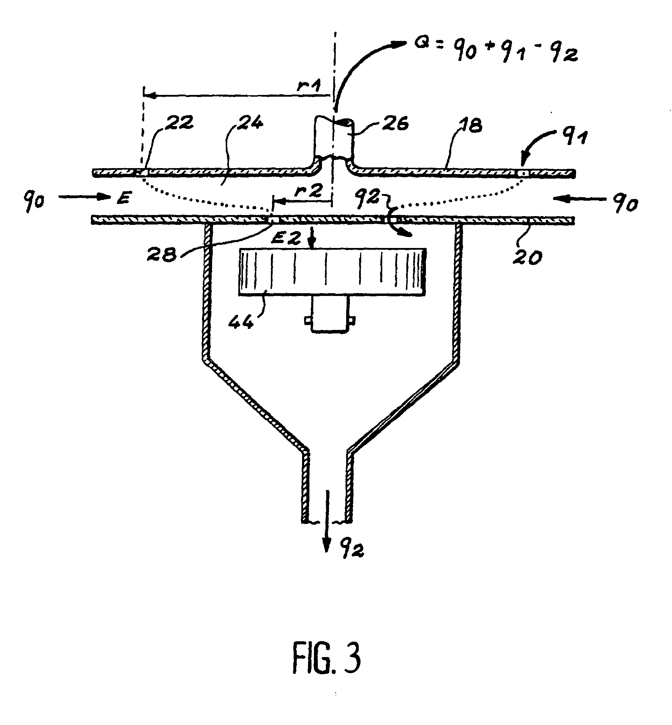

Une autre variante d'un spectromètre selon l'invention est représentée sur la figure 3. Là encore, la fente annulaire d'extraction 28 peut avantageusement être réduite à un orifice d'extraction central. Par ailleurs, sur cette figure 3, des références identiques désignent les mêmes éléments que sur la figure 2.

Conformément à ce qui est illustré sur la figure 3, le spectromètre comprend un détecteur 44, par exemple un détecteur nucléaire pour l'analyse des aérosols radioactifs. En particulier, ce détecteur peut être un détecteur au silicium, à barrière de surface, en vue d'une analyse en continu, par exemple pour la mesure de la granulométrie d'aérosols radioactifs "émetteurs $\alpha$", comme les descendants du radon. Là encore, des moyens sont prévus pour établir entre la surface supérieure du détecteur 44 et le deuxième disque 20 du sélecteur un champ électrique $E_2$ qui permet de précipiter les particules chargées sélectionnées par la fente annulaire ou l'orifice d'extraction central.

Il est possible de réaliser, avec cet appareil, un spectromètre de granulométrie. A cette fin, l'appareil de sélection tel que décrit sur la figure -3 est relié à des moyens de traitement du signal mesuré à l'aide du détecteur 44. Comme déjà exposé ci-dessus, un spectre de mobilité des particules est d'abord établi à l'aid des moyens prévus à cet effet.

Puis, un traitement de déconvolution des données, fonctionnant sur un micro-ordinateur spécialement programmé à cet effet, permet de remonter à la granulométrie des particules radioactives sélectionnées. Ce traitement doit tenir compte non seulement des données déjà mentionnées ci-dessus dans le cas du mode de réalisation mettant en oeuvre un électromètre, mais aussi de l'effet de diminution de l'activité des radionucléides déposés sur le détecteur, en fonction du temps, compte tenu de leur période de demi-vie ; un tel effet, pour des radionucléides déposés sur un filtre, est exposé dans l'article de R.D. Evans intitulé "Engineer's guide to the elementary behavior of radon daughters" paru dans Health Physics, volume 17, pages 229 à 252 (1969).

**Revendications**

**1.** Spectromètre de mobilité électrique de particules d'aérosol contenues dans une atmosphère à examiner, comprenant :

- un premier (18) et un second (20) disques conducteurs coaxiaux, espacés et parallèles, entre lesquels on peut établir un champ électrique en les portant à des potentiels différents, l'espace (24) compris entre les deux disques communiquant avec l'atmosphère à examiner,

- une aspiration centrale (26) prévue dans le premier disque pour faire circuler dans cet espace, à partir de la périphérie des disques, un écoulement d'air filtré laminaire, centripète et stable,
- des moyens aptes à faire varier la mobilité électrique sélectionnée,
  le second disque ayant une ouverture annulaire (28, 29) de rayon moyen $r_2$

**caractérisé en ce que** l'espace (24) compris entre les deux disques communique avec l'atmosphère à examiner à travers une fente annulaire (22) de rayon $r_1$ pratiquée dans le premier disque, **en ce que** $r_2$ est inférieur à $r_1$ pour permettre la sélection de particules d'aérosol ayant une mobilité électrique donnée et **en ce que** le spectromètre comprend un détecteur (32, 44) d'aérosols placé immédiatement au-dessous de l'ouverture annulaire (28, 29) de façon à pouvoir détecter les particules ayant la mobilité électrique donnée.

2. Spectromètre selon la revendication 1, **caractérisé en ce que** l'ouverture annulaire se trouve réduite à un seul orifice central (29).

3. Spectromètre selon la revendication 1 ou 2, **caractérisé en ce que** le détecteur est un électromètre.

4. Spectromètre selon la revendication 1 ou 2, **caractérisé en ce que** le détecteur est un détecteur nucléaire (44) pour l'analyse d'aérosols radioactifs.

5. Spectromètre de granulométrie d'aérosols submicroniques comportant :

   - un spectromètre de mobilité électrique selon l'une au moins des revendications 1 à 4,

   - des moyens de traitement du signal obtenu par le détecteur, pouvant être programmés de façon à obtenir, à partir d'un spectre de mobilité électrique obtenu en sortie du détecteur, un spectre de granulométrie de l'aérosol.

**Claims**

1. Electrical mobility spectrometer for aerosol particles contained in an atmosphere to be examined, comprising a first (18) and a second (20), spaced, parallel, coaxial conductive disks between which it is possible to establish an electric field by raising them to different potentials, the space (24) between the two disks communicating with the atmosphere to be examined, a central suction means (26) provided in the first disk for the circulation in said space and from the periphery of the disks, a stable, centripetal, laminar, filtered air flow and means able to vary the selected electrical mobility, the second disk having an annular opening (28, 29) of mean radius $r_2$, **characterized in that** the space (24) between the two disks communicates with the atmosphere to be examined through an annular slot (22) of radius $r_1$ made in the first disk, **in that** $r_2$ is smaller than $r_1$ so as to make it possible to select aerosol particles having a given electrical mobility and **in that** the spectrometer comprises an aerosol detector (32, 44) immediately below the annular opening (28, 29) so as to be able to detect the particles having the given electrical mobility.

2. Spectrometer according to claim 1, **characterized in that** the annular opening is reduced to a single central orifice (29).

3. Spectrometer according to claim 1 or 2, **characterized in that** the detector is an electrometer.

4. Spectrometer according to claim 1 or 2, **characterized in that** the detector is a nuclear detector for the analysis of radicactive aerosols.

5. Submicron aerosol grain size spectrometer comprising an electrical mobility spectrometer according to at least one of the claims 1 to 4 and means for processing the signal obtained by the detector programmable in such a way as to obtain, from the electrical mobility spectrum obtained at the detector outlet, a grain size spectrum of the aerosol.

**Patentansprüche**

1. Spektrometer der elektrischen Mobilität von Aerosolteilchen, enthalten in einer zu untersuchenden Atmosphäre, umfassend:

   - eine erste (18) und eine zweite (20) koaxiale leitfähige Scheibe, beabstandet und parallel, zwischen denen man ein elektrisches Feld erzeugen kann, indem man unterschiedliche Potentiale an sie anlegt, wobei der zwischen den beiden Scheiben enthaltene Raum (24) mit der zu untersuchenden Atmosphäre kommuniziert,
   - eine zentrale Absaugung (26), vorgesehen in der ersten Scheibe, um in diesem Raum eine vom Rand der Scheiben ausgehende laminare Strömung gefilterter Luft zirkulieren zu lassen, zentripedal und stabil,
   - Einrichtungen um die gewählte elektrische Mobilität variieren zu können, wobei die zweite Scheibe eine ringförmige Öffnung (28, 29) mit einem mittleren Radius $r_2$ aufweist,

   **dadurch gekennzeichnet, dass** der zwischen den beiden Scheiben enthaltene Raum mit der zu untersuchenden Atmosphäre durch einen ringförmigen Schlitz (22) mit Durchmesser $r_1$ kommuniziert, vorgesehen in der ersten Scheibe, dadurch, dass $r_2$ kleiner ist als $r_1$, um die Selektion von Aerosolteilchen zu ermöglichen, die eine bestimmte elektrische Mobilität haben, und dadurch, dass das Spektrometer einen Aerosol-Detektor (32, 44) umfasst, der unmittelbar unter der ringförmigen Öffnung (28, 29) angeordnet ist, um die Teilchen detektieren zu können, welche die bestimmte elektrische Mobilität haben.

2. Spektrometer nach Anspruch 1, **dadurch gekennzeichnet, dass** die ringförmige Öffnung auf eine einzige zentrale Öffnung (29) reduziert ist.

3. Spektrometer nach Anspruch 1 oder 2, **dadurch gekennzeichnet, dass** der Detektor ein Elektrometer ist.

4. Spektrometer nach Anspruch 1 oder 2, **dadurch gekennzeichnet, dass** der Detektor ein Nukleardetektor (44) für die Analyse radioaktiver Aerosole ist.

5. Granulometrie-Spektrometer für submikrometrische Aerosole, umfassend:

   - ein Spektrometer der elektrischen Mobilität nach wenigstens einem der Ansprüche 1 bis 4,
   - Einrichtungen zur Verarbeitung des durch den Detektor erhaltenen Signals, die so programmiert werden können, dass sie aufgrund eines Spektrums der elektrischen Mobilität, das man am Ausgang des Detektors erhält, ein Aerosoi-Granulometriespektrum erstellen können.

FIG.1

FIG. 2

FIG. 3